# EUROPEAN PATENT SPECIFICATION

(11) **EP 3 137 288 B1**
(45) Date of publication and mention of the grant of the patent: **20.11.2019**
(21) Application number: 15703197.2
(22) Date of filing: 26.01.2015
(51) Int. Cl.: B29C 73/00, B32B 7/02, B32B 5/14, B32B 7/12, F16B 11/00

(54) **STRUCTURAL BONDED PATCH WITH TAPERED ADHESIVE DESIGN**
STRUKTURELLES HAFTPATCH MIT KONISCHEM HAFTSTOFFENTWURF
PIÈCE STRUCTURALE LIÉE À MOTIF ADHÉSIF CONIQUE

(30) Priority: 01.05.2014 US 201414267220
(43) Date of publication of application: 08.03.2017
(73) Proprietor: The Boeing Company, Chicago, IL 60606-1596 (US)
(72) Inventor: DAN-JUMBO, Eugene A., Chicago, IL 60606 (US)
(74) Representative: Duxbury, Stephen
(86) International application number: PCT/US2015/012897
(87) International publication number: WO 2015/167630

(56) References cited:
- EP-A2- 2 055 466
- WO-A1-2009/026442
- WO-A1-2010/104676
- WO-A1-2010/104745
- WO-A1-2010/104746
- US-B1- 8 524 356
- US-B1- 8 617 694

## Description

### BACKGROUND INFORMATION

### 1. Field:

The present disclosure relates generally to composite structures and, in particular, to reworking composite structures. Still more particularly, the present disclosure relates to a method and apparatus for reworking inconsistent areas of composite structures using a patch with a tapered adhesive design.

### 2. Background:

Composite structures sometimes have localized areas containing one or more inconsistencies that may require rework in order to bring the structure within design tolerances. These inconsistencies may include, for example, without limitation, a crack, delamination, and other types of inconsistencies formed during the lifecycle of a composite structure.

Oftentimes, an inconsistent area of a composite structure is reworked using a patch. This patch may comprise composite materials, metals, or a combination thereof. Different types of techniques may be used to rework the composite structure using the patch.

For instance, a patch may be placed over the inconsistent area and secured to the parent structure using mechanical fasteners. The condition of the patch may be monitored over time by visually inspecting the fasteners.

In other cases, a rework patch may be secured to a parent structure using a bonded joint. This technique may also require the use of mechanical fasteners that provide secondary load paths forming an arrestment mechanism to limit the growth of an inconsistency.

These types of patching techniques, however, may not perform as desired when the composite structure is an aircraft structure. For example, the use of fasteners may increase aircraft weight, drag on the aircraft, or both more than desired. As another example, a bonded patch may not reduce the spread of the inconsistency in a desired manner. Therefore, it would be desirable to have a method and apparatus that take into account at least some of the issues discussed above, as well as other possible issues.

WO 2010/104676A1 discloses a patch for reworking an inconsistent area of a composite structure comprising a composite laminate patch and a bond joint between the patch and the structure. The bond joint includes at least first and second regions respectively having differing properties for releasing strain energy around the inconsistent area at different rates.

### SUMMARY

The disclosure provides a method and apparatus for reworking an inconsistent area of a structure. The structure may take the form of a composite structure used in aircraft. In some cases, the structure also may be a metal structure.

A patch is bonded to the inconsistent area of the structure. The patch has two or more regions with different structural properties. Tapered adhesive sections are positioned between the patch and the structure. These tapered adhesive sections have different structural properties as well. For example, the tapered adhesive sections may have different kinematic constants, elastic constants, constitutive constants, inter-laminar fracture toughness, or a combination thereof.

Both the patch regions and the tapered adhesive sections may be tailored to reduce the strain energy release rate at the inconsistent boundary area more efficiently than patches using fasteners or bonded joints without tapered adhesive sections. Propagation of a crack may be reduced or eliminated. In this manner, the patch with the tapered adhesive sections substantially increases the damage tolerance and durability of the structure throughout the lifecycle of the aircraft. As a result, the tapered adhesive increases the lifetime of the patch and reduces the frequency of rework on the inconsistent area.

The features and functions can be achieved independently in various embodiments of the present disclosure or may be combined in yet other embodiments in which further details can be seen with reference to the following description and drawings.

### BRIEF DESCRIPTION OF THE DRAWINGS

**Figure 1** is an illustration of a bonded rework patch on a composite structure in accordance with an illustrative embodiment;
**Figure 2** is an illustration of a sectional view of a bonded rework patch on a composite structure in accordance with an illustrative embodiment;
**Figures 3****,** **3A, 3B,** and **3C** are illustrations of a plan view of an adhesive layer in accordance with an illustrative embodiment;
**Figure 4** is an illustration of a sectional view of an adhesive layer in accordance with an illustrative embodiment;
**Figure 5** is an illustration of a plan view of a composite rework patch forming part of a rework patch in accordance with an illustrative embodiment;
**Figure 6** is an illustration of a sectional view of a composite rework patch forming part of a rework patch in accordance with an illustrative embodiment;
**Figure 7** is an illustration of a sectional view of a tailored laminate patch divided into regions having differing inter-laminar toughness in accordance with an illustrative embodiment;
**Figure 8** is an illustration of a table showing a ply schedule for differing regions of a tailored laminate patch in accordance with an illustrative embodiment;
**Figure 9** is an illustration of a plan view illustrating plies in a laminate patch in accordance with an illustrative embodiment;
**Figure 10** is an illustration of a plan view illustrating plies in a laminate patch in accordance with an illustrative embodiment;
**Figure 11** is an illustration of a plan view illustrating plies in a laminate patch in accordance with an illustrative embodiment;
**Figure 12** is an illustration of a plan view illustrating plies in a laminate patch in accordance with an illustrative embodiment;
**Figure 13** is an illustration of a plan view of a rework patch illustrating a typical propagation path of a disbonding in accordance with an illustrative embodiment;
**Figure 14** is an illustration of a sectional view showing a progression of disbonding through regions of a patch in accordance with an illustrative embodiment;
**Figure 15** is an illustration of a sectional view showing a progression of disbonding through regions of a patch in accordance with an illustrative embodiment;
**Figure 16** is an illustration of a sectional view showing a progression of disbonding through regions of a patch in accordance with an illustrative embodiment;
**Figure 17** is an illustration of a flowchart of a process for reworking areas of a composite structure containing inconsistencies using a patch in accordance with an illustrative embodiment;
**Figure 18** is an illustration of an aircraft in accordance with an illustrative embodiment;
**Figure 19** is an illustration of a block diagram of a rework environment in accordance with an illustrative embodiment;
**Figure 20** is an illustration of a bonded component rework patch in accordance with an illustrative embodiment;
**Figure 21** is an illustration of a local sectional view of a tapered adhesive section in accordance with an illustrative embodiment;
**Figure 22** is an illustration of a graph of the out-of-plane inter-laminar tension stress inside a bonded patch in accordance with an illustrative embodiment;
**Figure 23** is an illustration of a graph of the inter-laminar sheer stress distribution inside a bonded patch in accordance with an illustrative embodiment;
**Figure 24** is an illustration of a global sectional view of a bonded composite rework patch on a composite structure in accordance with an illustrative embodiment;
**Figure 25** is an illustration of a bonded composite rework patch in accordance with an illustrative embodiment;
**Figure 26** is an illustration of a flowchart of a process for reworking a composite structure using a patch system with tapered adhesive sections in accordance with an illustrative embodiment;
**Figure 27** is an illustration of a block diagram of an aircraft manufacturing and service method in accordance with an illustrative embodiment; and
**Figure 28** is an illustration of a block diagram of an aircraft in which an illustrative embodiment may be implemented.

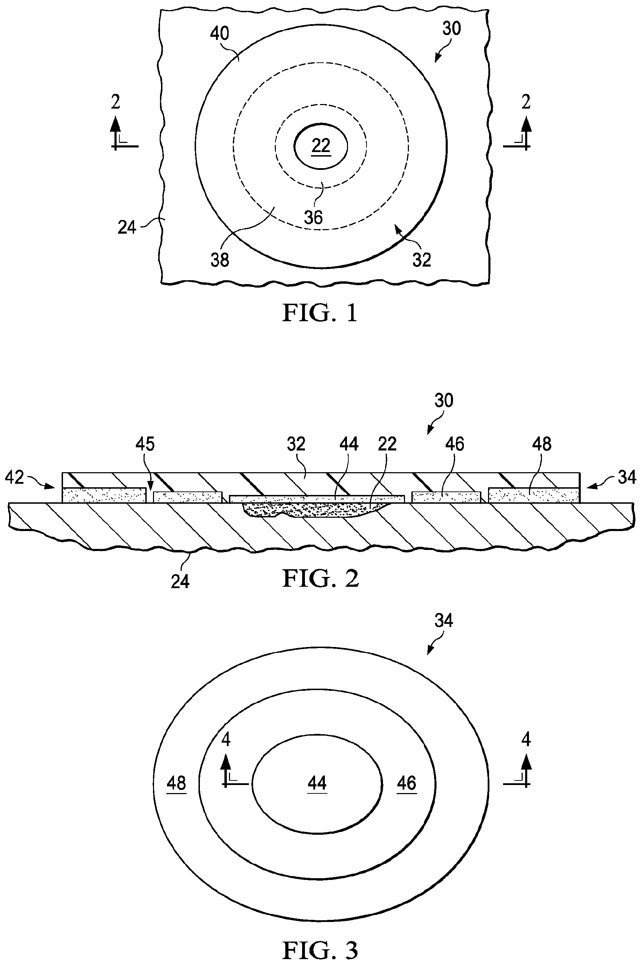

It is noted that the embodiments depicted in figures 1-19, and figures 24-38 are not in accordance with the invention as defined in the claims.

### DETAILED DESCRIPTION

The present invention is defined in the appended claims.

The illustrative embodiments recognize and take into account one or more different considerations. For example, the illustrative embodiments recognize and take into account that it may be desirable to reduce or eliminate the extension of an inconsistency in an aircraft structure. As an example, the illustrative embodiments recognize and take into account that it may be desirable to provide a patch for an inconsistent area on a composite aircraft structure that does not disbond during the operational life of the aircraft. In this illustrative example, "disbond" may refer to separation of the patch at the bond joint between the patch and the underlying composite structure.

The illustrative embodiments further recognize and take into account that it may be desirable to reduce stresses in the patch, the composite structure, or both to substantially prevent the inconsistency from extending within the composite structure. For example, without limitation, the illustrative embodiments recognize and take into account that it may be desirable to design the patch and the underlying adhesive layers to release strain energy in a desired manner to substantially prevent a crack from extending through the composite structure.

Thus, the illustrative embodiments provide a method and apparatus for reworking a structure. The structure may be a composite structure for an aircraft. An apparatus comprises a composite rework patch and a plurality of adhesive layers. The composite rework patch includes a first side having a contour conforming to an inconsistent area on a composite structure. The composite rework patch comprises a plurality of regions having different structural properties. The plurality of adhesive layers is located on the first side of the patch. The plurality of adhesive layers change in thickness within at least one region of the composite rework patch to form tapered adhesive sections.

Referring now to the figures and, in particular, to **Figures 1** and **2****.** A composite rework patch **30** is used to rework an inconsistent area **22** in a composite structure **24.** As used herein, "inconsistent area", "inconsistency" and "inconsistencies" each refer to a localized area in the composite structure **24** that may be outside of designed tolerances. The inconsistent area **22** may comprise, for example, without limitation, a void, a dent, or a porosity that may occur at the time that the composite structure **24** is manufactured, or later during the service life of the composite structure **24.**

The composite rework patch **30** comprises a laminate layer **32** which overlies the inconsistent area **22** and is bonded to the composite structure **24** by an adhesive layer **34** comprising a structural adhesive forming a bond joint **42.** The size of the composite rework patch **30** may vary with the application and the dimensions of the inconsistent area **22.**

The adhesive layer **34** divides the bond joint **42** and the inconsistent area **22** into first, second and third control regions **36, 38, 40,** respectively, that may provide a graceful reduction of transition loads transmitted between the composite structure **24** and the composite rework patch **30.** The first control region **36** is centrally located over the inconsistent area **22,** and the second and third control regions **38, 40** may respectively comprise a pair of substantially concentric rings surrounding the centrally located first control region **36.**

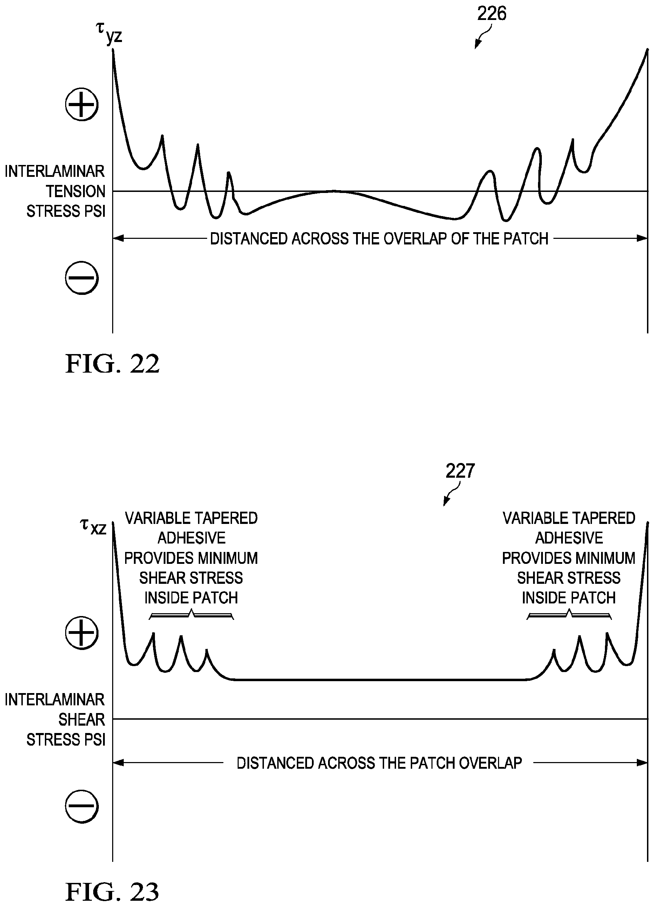

Whi1e the control regions **36, 38, 40** are shown as being generally circular in an illustrative embodiment, a variety of other shapes may be formed. Also, in other embodiments, the composite rework patch **30** may have only two control regions, or may have more than three control regions, as shown in **Figure 22****.**

The first control region **36** may exhibit favorable in-plane adhesive stresses. The second control region **38** may be referred to as a "durability region" and any disbond within this region between the laminate layer **32** and the composite structure **24** may need to be evaluated and quantified in order to determine whether rework should be performed. The third control region **40,** which may be dominated by in-plane shear and peeling moments, may affect the behavior of the entire structural bond between the laminate layer **32** and the composite structure **24.**

Referring now particularly to **Figures 2-4****,** the adhesive layer **34** may comprise a central first adhesive section **44** surrounded by concentric ring shaped second and third adhesive sections **46** and **48.** The size and shape of the first, second, and third adhesive sections **44, 46, 48** generally correspond to the first, second, and third control regions **36, 38, 40,** respectively, of the composite rework patch **30.** Each of the first, second, and third adhesive sections **44, 46, 48** may comprise one or more plies of a commercially available structural adhesive which is generally available in film or sheet form that may be cut to the desired shape.

The first, second, and third adhesive sections **44, 46, 48** may also be formed from a commercially available structural adhesive paste. As previously noted, multiple plies (not shown), or layers, of the adhesive sheet material may be built up to form a desired thickness "t" for each of the first, second, and third adhesive sections **44, 46, 48.** The strength of the bond may be tailored using the thickness "t" between the laminate layer **32** and the composite structure **24.** In some applications only a single ply of adhesive sheet material may be required, while in other applications, more than one ply may be necessary, depending on the application and the thickness of the adhesive sheet.

Circumferential gaps "g" may be formed between first, second, and third adhesive sections **44, 46, 48** to aid in arresting the growth of potential disbonding between the laminate layer **32** and the composite structure **24.** A filler **50** may be placed in one or both of the gaps "g" to aid in the arrestment.

The properties of each of the first, second, and third adhesive sections **44, 46, 48** may be tailored in a manner that affects the rate at which first, second, and third control regions **36, 38, 40** of the bond joint **42,** respectively, release strain energy. Tailoring of each of the first, second, and third adhesive sections **44, 46, 48** may be achieved by altering the dimensions of the first, second, and third adhesive sections **44, 46, 48,** respectively, such as thickness "t" or width "w", or by altering the form of the film, paste, scrim, etc., as well as by altering the structural properties of the adhesive layer, such as fracture toughness, peel or shear properties, or by providing the gap "g" between the first, second, and third adhesive sections **44, 46, 48.** Additionally, a spacer or the filler **50** may be interposed between first, second, and third adhesive sections **44, 46, 48** to aid in arresting disbond growth.

The use of the tailored first, second, and third adhesive sections **44, 46, 48** may result in a bonded composite rework patch **30** that is divided into multiple control regions **36, 38, 40** that respectively release strain energy at different rates. The first, second, and third control regions **36, 38, 40** provide for a graceful reduction of transition loads between the patch **30** and the composite structure **24,** which may not only allow prediction of a course of disbond extension, but can allow assessment of the condition of the composite rework patch **30** through simple visual inspection, or other non-destructive inspection techniques. Although three control regions are shown and discussed, more or less than three control regions may be present.

The first control region **36** of the composite rework patch **30** which overlies the inconsistent area **22** exhibits favorable in-plane stresses that may suppress the stress concentration around the boundary of a disbond of the bond joint **42.** The global adhesive stresses within the first control region **36** may reduce the strain energy release rate necessary for extension of a disbond under maximum load limits applied to the composite structure **24.**

The characteristics of the composite rework patch **30** within the second control region **38** may result in the release of strain energy at a rate greater than that of the first control region **36.** Any disbond that may occur in the bond joint **42** within the second control region **38** may be anticipated by a fatigue durability disbond curve (not shown) which defines the work input required to initiate disbond growth. The characteristics of the third control region **40** are selected such that the strain energy release rate within the third control region **40** is greater than that of the second control region **38** to discourage disbond initiation and growth, as well as in-plane shear and peeling moments.

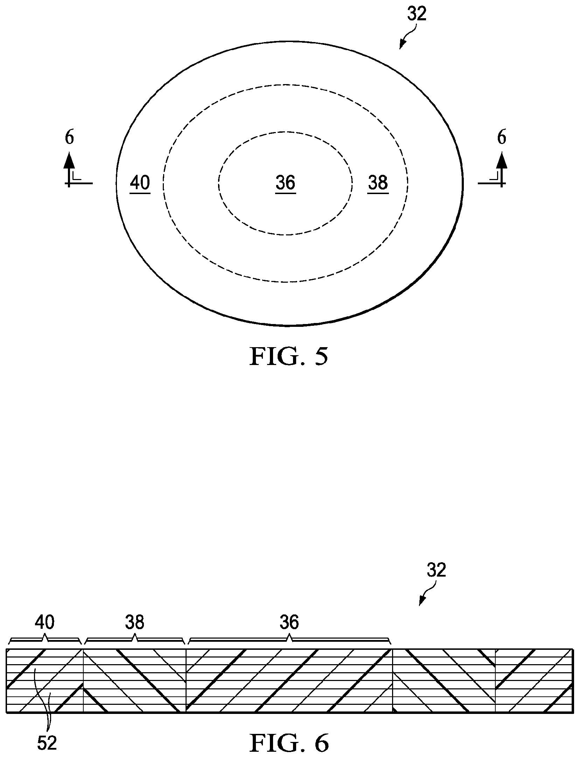

Attention is now directed to **Figures 5** and **6** which illustrate a laminate layer **32** comprising multiple plies **52** of fiber reinforced polymer in which the plies **52** may be tailored in order to aid in achieving first, second, and third control regions **36, 38, 40,** respectively, having the desired strain energy release rates.

The strain energy release rate within the laminated layer **32** may be tailored within the control regions **36, 38, 40** by selecting the plies, arranging the plies, or both such that the plies in each of the first, second, and third control regions **36, 38, 40** have different characteristics. In other words, each of the first, second, and third control regions **36, 38, 40** may have ply characteristics that are unique to that region.

For example, without limitation, the plies in the second control region **38** may have characteristics that are different from those in the first or third control regions **36** or **40,** and the plies in the first control region **36** may have characteristics that are different than those in the second and third control regions **38** and **40.** As used herein, "characteristics" and "ply characteristics" refer to, for example, without limitation, at least one of the type, size, or quantity of fiber reinforcement in a ply, ply thickness, gaps between the plies, materials, elements or structures placed between the plies, the number of plies, the type or density of matrix used in the ply, the layup orientation (angle) of each ply, the sequence of ply orientations in a stack of the plies, or other characteristics.

As used herein, the phrase "at least one of," when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required.

For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

The strain energy release rate within one or more of the first, second, and third control regions **36, 38, 40** may be tailored by forming a scarf or tapered joint (not shown) between the laminate layer **32** and the composite structure **24.** The strain energy release rate may also be tailored by providing gaps (not shown) in certain areas between the plies **52** in a manner that may alter the mechanical properties of the laminate layer **32** in each of the first, second, and third control regions **36, 38, 40.**

Also, differing orientation sequences of the plies **52** may be desirable in order to aid in achieving the defined first, second, and third control regions **36, 38, 40.** Orientation refers to the layup angle or direction of reinforcing fibers in a ply from a central axis of the ply. For example, without limitation, the angles of the reinforcing fibers in each region may be selected from one of 0°, 30°, 60°, 90°, 0°, +45°, -45°, 90, and other suitable angles.

In the example illustrated in **Figures 5** and **6****,** the materials used in the plies **52,** the orientation sequences of plies **52,** or both within the first control region **36** result in the highest rate of strain relief. Selection of these materials, ply orientation sequences, or both in second control region **38** and third control **40** result in intermediate and lowest rates of release of strain energy, respectively. In other embodiments, depending on the application, the third control region **40** may possess the highest rate of strain energy relief, while the first control region **36** possess the lowest rate of strain energy relief. In other words, plies **52** in each region may be configured in a different manner than shown herein.

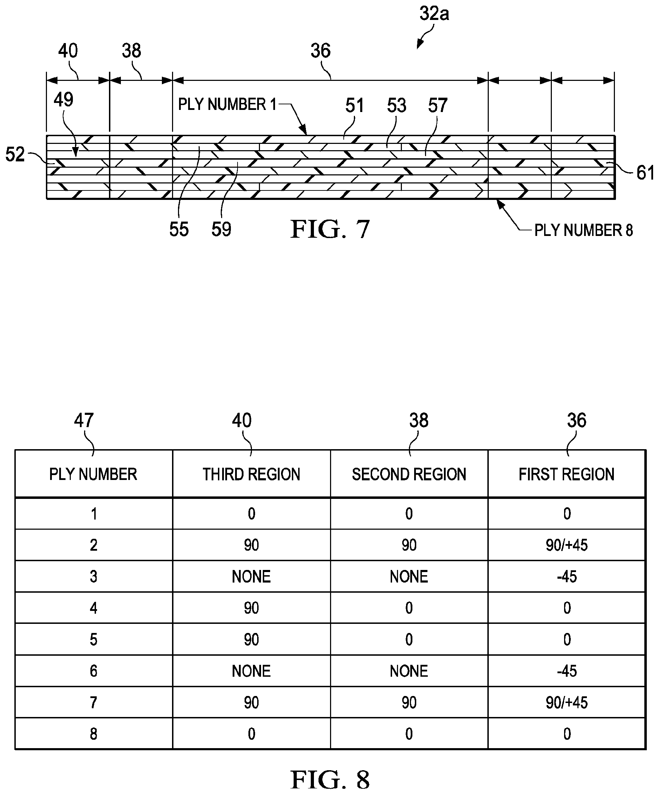

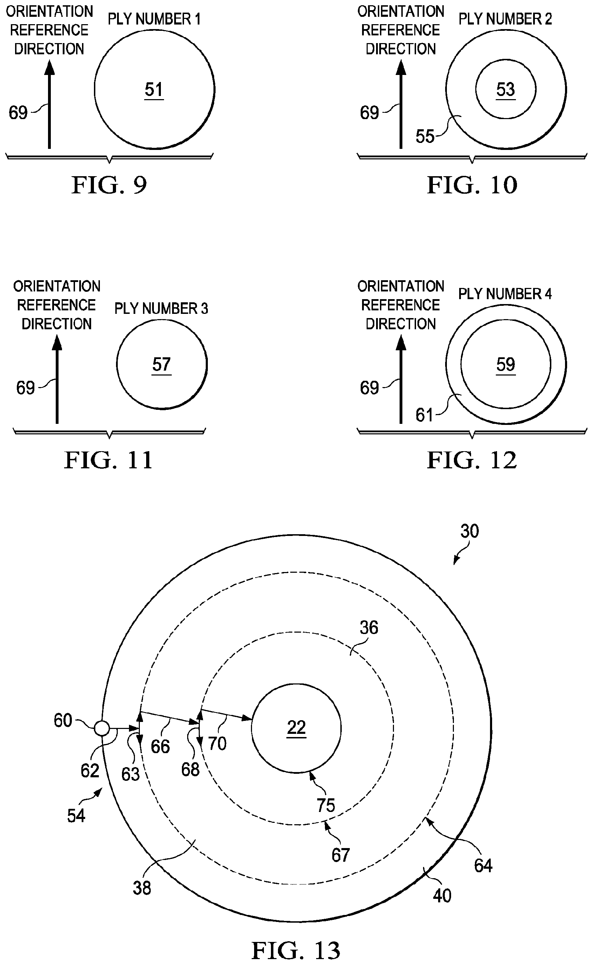

Attention is now directed to **Figure 7** which illustrates a typical tailored laminate patch **32a** comprising eight plies **52** of fiber reinforced polymer, before being compacted and cured into a consolidated laminate. When viewed in plan, the shape of the tailored laminate patch **32a,** including the first, second, and third control regions **36, 38, 40,** may be substantially the same as that of the composite rework patch **32** illustrated in **Figure 5****.** The plies **52** forming the tailored laminate patch **32a** may be referred to as plies #1-#8. **Figure 8** is a table illustrating the ply orientations for the laminate patch **32a** within the first, second, and third control regions **36, 38, 40** for each of the plies #1-#8, while **Figures 9-****12** show the constituent sections of plies 1-4.

As mentioned above in connection with **Figures 5** and **6****,** the characteristics of the plies **52** may be different in each of the first, second, and third control regions **36, 38, 40.** The rate of release of strain energy in the first, second, and third regions **36, 38,** and **40** is related to the modulus or stiffness that defines the inter-laminar toughness of the tailored laminate patch **32a** in the respective first, second, and third control regions **36, 38, 40.**

In the illustrative example, the first control region **36** has the highest inter-laminar fracture toughness, while the third control region **40** has the lowest inter-laminar fracture toughness. In a depicted example, the inter-laminar fracture toughness of the third control region **40** may be between approximately 0.5 and 1.0 in-#/in². The inter-laminar fracture toughness of the second control region **38** may be between approximately 1.5 and 2.0 in-#/in². The first control region **36** may have an inter-laminar fracture toughness equal to or greater than approximately 2.5 in-#/in².

In other illustrative examples, however, the third control region **40** may have the highest inter-laminar fracture toughness and the first control region **36** may have the lowest inter-laminar fracture toughness. In this case, the inter-laminar fracture toughness of the second control region **38** may be between that of the first and third control regions **36, 40,** respectively.

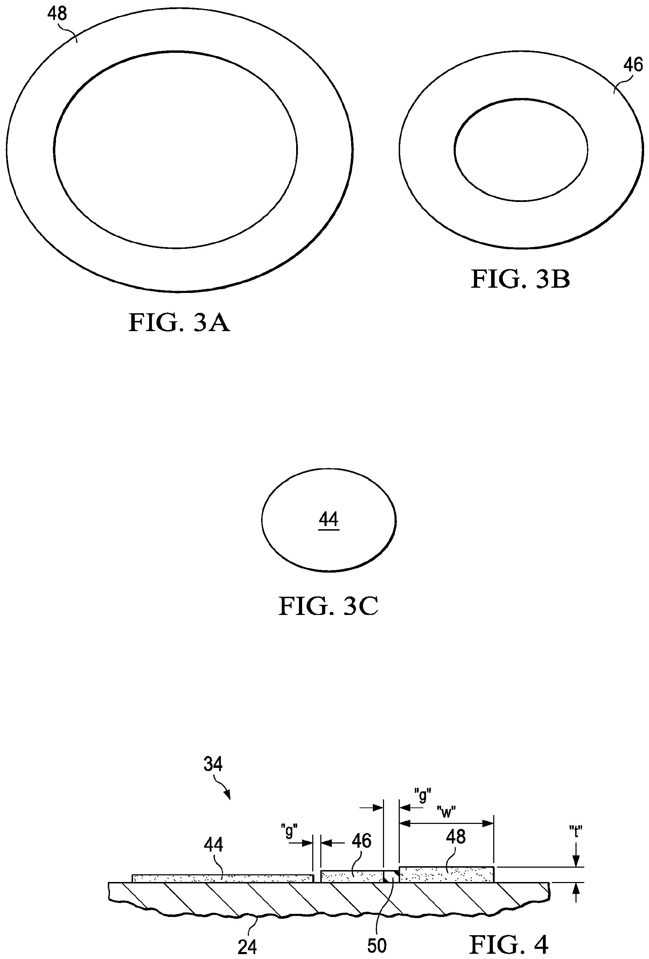

The particular values of the inter-laminar fracture toughness for the first, second, and third control regions **36, 38, 40** will depend upon the application and the particular mechanical properties of the plies **52** that are present within the first, second, and third control regions **36, 38, 40.** Moreover, the values for the inter-laminar fracture toughness within the first, second, and third control regions **36, 38, 40** may be tailored to the properties of the adhesive layer **34** as shown in **Figures 3****,** **3A, 3B,** and **3C****.** For instance, the patch may be configured such that the mechanical properties of sections **44, 46, 48** of the adhesive layer **34** and the mechanical properties of the tailored laminate patch **32a** within the first, second, and third control regions **36, 38, 40** are suitably matched to provide maximum performance. Although not shown in **Figure 7****,** the first, second, and third adhesive sections **44, 46, 48** of the adhesive layer **34,** respectively, underlie and may be substantially coextensive with the first, second, and third control regions **36, 38, 40** of the laminate patch **32a.**

As previously discussed, the inter laminar fracture toughness within the first, second, and third control regions **36, 38, 40** may be controlled by using differing prepreg materials in the plies **52,** by overlapping the plies **52** between adjacent ones of the first, second, and third control regions **36, 38, 40,** by using different ply orientation sequences within each of the first, second, and third control regions **36, 38, 40,** or a combination thereof. For example, **Figure 8** illustrates differing ply orientation sequences for plies #1-#8 within each of the first, second, and third control regions **36, 38, 40.**

It can be seen, for example, that in comparing the orientation sequences of the plies **52** for the second and third control regions, **38, 40** respectively, ply #4 and ply #5 are oriented at 90° in the third control region **40,** but have a 0° orientation in the second control region **38.** As previously mentioned, ply orientation refers to the direction of orientation of unidirectional reinforcing fibers held in a polymer matrix, usually a prepreg, which forms each of the plies **52.** The sequence of orientations of plies #1-#8 for the first control region **36 is** different from the sequence of orientations for either the second or third control regions, **38, 40.**

Referring now **Figures 7** and **9****-12,** ply #1 comprises a single, circularly shaped section **51,** as shown in **Figure 9****,** having a 0° degree fiber orientation relative to an orientation reference direction **69,** which extends across all of the first, second, and third control regions **36, 38, 40.** Ply #2 includes a circular center section **53,** shown in **Figure 10****,** having a +45° fiber orientation. Ply #2 also has an outer ring shaped section **55** having a 90° fiber orientation. As a result of the configuration of ply #2, the control region **36** has combined fiber orientations of 90° and +45° degrees, while the control regions **38** and **40** both have 90° fiber orientations.

Ply #3 comprises a single section **57 (****Figure 11****)** within first control region **36** having a -45° fiber orientation, while in the second and third control regions **38** and **40,** gaps **49 (****Figure 7**) are present. Finally, ply #4 **(****Figure 12****)** comprises a section **59** having a 0° fiber orientation that extends throughout the first and second control regions **36, 38.** Section **59** is surrounded by a section **61** having a 90° fiber orientation which is confined to the third control region **40.** Plies #5-8, shown in **Figure 7****,** are essentially a mirror image of plies #1-4, described above.

In this illustrative example, each of the first, second, and third control regions **36, 38, 40** possesses a different inter-laminar fracture toughness in the tailored laminate patch **32a,** the bond joint **42,** or both **(****Figure 2**). The inter-laminar fracture toughness within the first, second, and third control regions **36, 38, 40** of the tailored laminate patch **32a** may be configured to compliment the global adhesive stresses in the bond joint **42** so as to contain and resist growth of inconsistencies either in the tailored laminate patch **32a** or the bond joint **42.**

**Figure 13** illustrates the manner in which a disbond beginning at point **60** at the outer edge of the third control region **40** and growing inwardly may be arrested. The disbond beginning at outer edge **54** may be illustrated in this example as growing directly inward, as shown in the direction of arrow **62,** until the boundary **64** is reached between the second and third control regions **38, 40.** As a result of at least one of the difference in materials in the first, second, and third control regions **36, 38, 40,** the presence of a gap "g" or filler **50 (****Figure 4**), or the difference in the adhesive properties of the first, second, and third adhesive sections **44, 46, 48** of the adhesive layer **34 (****Figure 2**), the disbond is arrested and may move circumferentially, as shown in the direction of arrow **63,** around the boundary **64** of the third control region **40.**

In another illustrative example, the disbond may progress from the third control region **40** and into the second control region **38,** then progress inward toward the first control region **36,** as indicated by arrow **66.** When the progression of the disbond reaches the boundary **67** between the first and second control regions **36, 38,** it is arrested and may move circumferentially around the boundary **67** as indicated by arrow **68.**

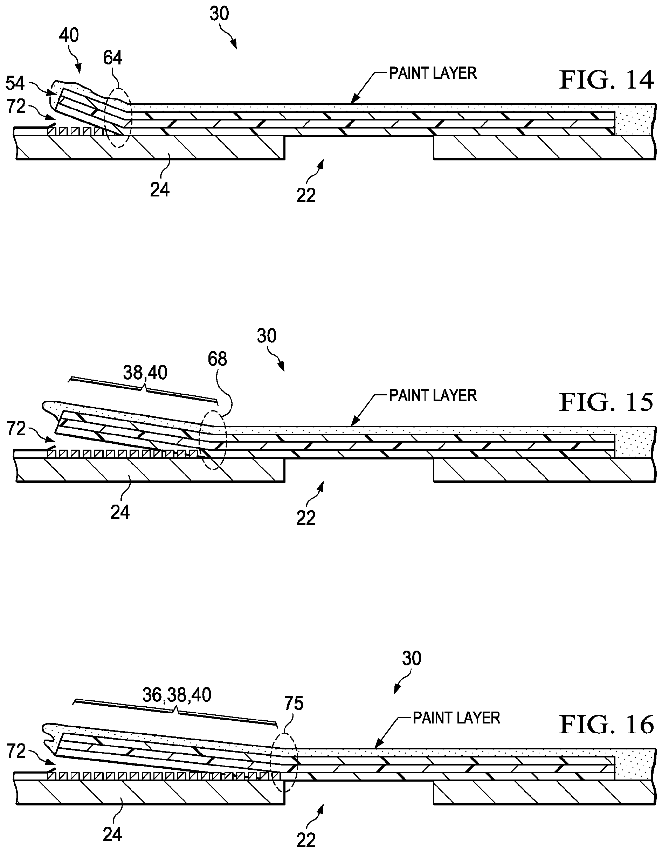

Referring to **Figures 13** and **14****,** as the disbond **72** moves inward from point **60,** the outer edge **54** of the composite rework patch may peel upward. This peeling may result in cracking a portion of the overlying paint (not shown), which provides a visual indication of disbond initiation or growth within the third control region **40.** This visual indication of a disbond may terminate at the boundary **64** between the second and third control regions **38, 40.**

As shown in **Figure 15****,** if the disbond **72** continues into the second control region **38** toward the boundary **67,** the composite rework patch **30** in the area of the second and third control regions **38, 40** may peel upward. The overlying paint may be further cracked and provide a visual indication that the disbond **72** has progressed into or through the second control region **38.**

**Figure 16** illustrates the disbond **72** having progressed up to the boundary **75** of the inconsistent area **22.** At this point, the areas of the composite rework patch **30** and all three of the first, second, and third control regions **36, 38, 40** may peel upward to further crack overlying paint. This action provides an even more obvious visual indication that the disbond has advanced to a point where the composite rework patch **30** may need rework.

In this illustrative example, the first, second, and third control regions **36, 38, 40** of the composite rework patch **30** provide a means of allowing nondestructive visual inspection of the condition of the composite rework patch **30,** including the bond joint **42** between the composite rework patch **30** and the composite structure **24.** In other illustrative examples, other non-destructive inspection techniques may be used to assess the condition of the composite rework patch **30** in addition to, or in place of, visual inspection.

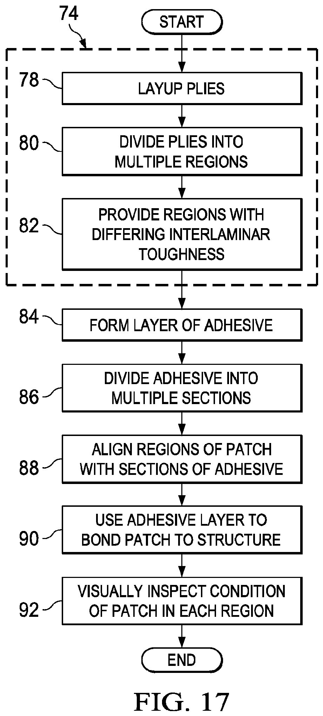

**Figure 17** illustrates a flowchart of a process for reworking areas of a composite structure containing inconsistencies using a patch. The patch used may be tailored rework patch **32a** shown in **Figure 7****.** The laminate layer is formed by a series of steps **74** beginning with laying up plies at step **78** using a ply schedule and orientation sequence that may be similar to those shown in **Figures 7** and **8****.**

As shown at step **80,** the plies are divided into multiple regions as part of the ply layup from step **78.** Also, the regions are provided with differing inter-laminar fracture toughness as shown at step **82,** by using differing materials and/or ply orientations as previously discussed.

At step **84,** a layer of adhesive is formed, and at step **86,** the adhesive layer is divided into multiple sections. The regions are then aligned, as shown at step **88,** with the sections of the adhesive layer. The adhesive layer is used to bond the patch to a structure, as shown at step **90.** At step **92,** the patch may be visually inspected over time to determine the condition of the patch in each of the regions.

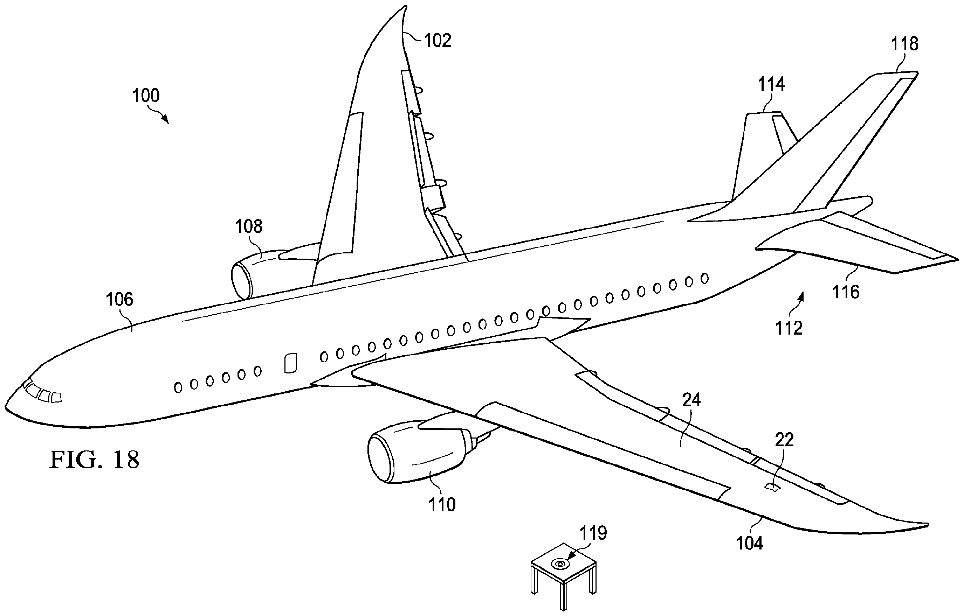

With reference to **Figure 18****,** an illustration of an aircraft is depicted in accordance with an illustrative embodiment. In this illustrative example, an aircraft **100** has a wing **102** and a wing **104** attached to a body **106.** The aircraft **100** includes an engine **108** attached to the wing **102** and an engine **110** attached to the wing **104.**

The body **106** has a tail section **112.** A horizontal stabilizer 114, a horizontal stabilizer **116,** and a vertical stabilizer **118** are attached to the tail section **112** of the body **106.**

In this illustrative example, the wing **104** includes the composite structure **24.** The composite structure **24** takes the form of a composite skin panel in this illustrative example. As shown, the inconsistent area **22** is present in the composite structure **24** on the wing **104.**

In this depicted example, the composite rework patch **119** is used to patch the inconsistent area **22.** The composite rework patch **119** includes a first control region, a second control region, and a third control region. The composite rework patch **119** also includes tapered adhesive sections (not shown in this view). These tapered adhesive sections are positioned between the composite rework patch **119** and the inconsistent area **22** to bond the composite rework patch **119** to the inconsistent area **22** to reduce forces acting on the inconsistent area **22** during operation of the aircraft **100.**

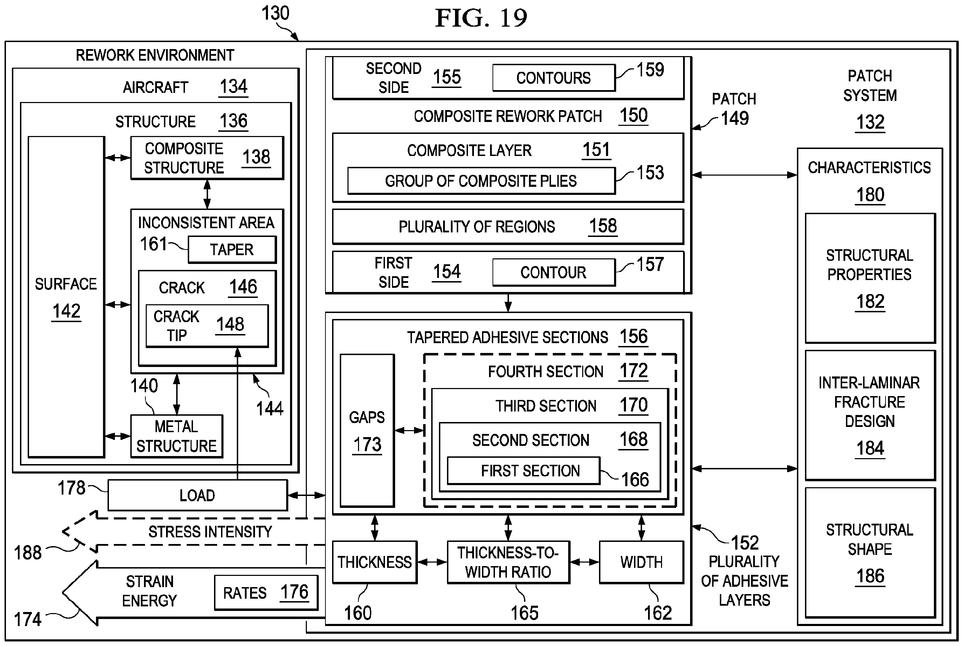

With reference to **Figure 19****,** an illustration of a block diagram of a rework environment is depicted in accordance with an illustrative embodiment. In this depicted example, a rework environment **130** is an environment in which a patch system **132** may be used to rework portions of an aircraft **134.**

The aircraft **100** shown in **Figure 18** is an example of a physical implementation for the aircraft **134** shown in this figure. Composite rework patch **30** shown in **Figures 1-16** and composite rework patch **119** shown in **Figure 18** are examples of implementations for the patch system **132** in this figure.

As depicted, the patch system **132** is used to rework a structure **136** in the aircraft **134.** The structure **136** may take various forms in this illustrative example. For instance, the structure **136** may be a composite structure **138,** a metal structure **140,** or take the form of another type of structure in the aircraft **134.** Specifically, the structure **136** in aircraft **134** may be selected from one of a control structure surface, a structural skin panel, a wing structure, a structural empennage, and other suitable types of structures.

In this depicted example, the structure **136** has a surface **142.** The surface **142** faces the exterior of the aircraft **134** in this illustrative example.

An inconsistent area **144** is present in the structure **136.** Inconsistent area **22** shown in **Figures 1-16** and **Figure 18** is an example of an implementation for the inconsistent area **144** shown in block form in this figure. In some illustrative examples, the inconsistent area **144** may extend beneath the surface **142** into the structure **136,** through additional structures connected to the structure **136,** or both.

As shown, the inconsistent area **144** includes a crack **146.** The crack **146** is a separation in the structure **136.** Other inconsistencies may be present in the inconsistent area **144** in addition to or in place of the crack **146** in other illustrative examples.

In this illustrative example, the crack **146** has a crack tip **148** on each end of the crack **146.** It may be desirable to substantially prevent the crack **146** from extending within the crack boundary in surface **142** of the structure **136.** In particular, it may be desirable to substantially prevent the crack tip **148** on each end of the crack **146** from extending further along the surface **142** of the structure **136.**

In this depicted example, the patch system **132** may be used to rework the inconsistent area **144** and substantially prevent the extension of the crack **146.** The patch system **132** includes a number of different components. As used herein, a "number of" items may be one or more items. For example, a number of components means one or more components.

As illustrated, the patch system **132** includes a patch **149.** The patch **149** is a structure configured to be positioned over the inconsistent area **144** and bonded to the inconsistent area **144** using a plurality of adhesive layers **152.** The patch **149** may include various materials such as a metal, a composite material, and other suitable materials.

As shown, the patch **149** takes the form of a composite rework patch **150** configured to be bonded to the composite structure **138** using the plurality of adhesive layers **152.** In this illustrative example, the composite rework patch **30** in **Figures 1-16** is an example of an implementation for the composite rework patch **150** in this figure.

In this depicted example, the composite rework patch **150** has a composite layer **151.** The composite layer **151** may comprise a group of composite plies **153.** Plies **52** in the laminate layer **32** shown in **Figure 7** may be an example of an implementation for the composite layer **151** with the group of composite plies **153.**

As used herein, a "group" of items means one or more items. For instance, the group of composite plies **153** includes one or more composite plies.

In this illustrative example, the composite rework patch **150** includes a first side **154** and a second side **155.** The second side **155** is opposite the first side **154.** In this illustrative example, the first side **154** of the composite rework patch **150** faces inward toward the structure **136** and is connected to the tapered adhesive sections **156.** The first side **154** of the composite rework patch **150** may have a contour **157** conforming to the inconsistent area **144** on the structure **136.**

The second side **155** of the composite rework patch **150** faces outward toward the environment around the structure **136.** The second side **155** of the composite rework patch **150** may have different contours **159,** depending on the particular implementation. In some cases, when bonded to the structure **136,** the second side **155** of the composite rework patch **150** may be substantially parallel to the surface **142** of the structure **136.**

In other examples, the second side **155** substantially conforms to a taper **161** in the inconsistent area **144** of the structure **136.** In other words, the second side **155** may conform to the taper **161** instead of being substantially parallel to the surface **142** once the composite rework patch **150** is bonded to the structure **136.** The taper **161** may be a result of scarf repair operations being performed on structure **136** prior to the application of the patch system **132.**

As depicted, the composite rework patch **150** comprises a plurality of regions **158.** First, second, and third control regions **36, 38,** and **40** shown in **Figure 1** are examples of implementations for the plurality of regions **158.**

In this illustrative example, the plurality of adhesive layers **152** is positioned on the first side **154** of the composite rework patch **150.** Specifically, a number of adhesive layers are positioned within each of the plurality of regions **158** of the composite rework patch **150.** The plurality of adhesive layers **152** may have different configurations corresponding to each of the plurality of regions **158.**

The plurality of adhesive layers **152** may comprise a film adhesive in this illustrative example. The film adhesive may take the form of a tape or a sheet that is placed on the inconsistent area **144** before applying the composite rework patch **150.**

In this illustrative example, each of the plurality of adhesive layers **152** has a thickness **160** and a width **162.** Thickness "t" and width "w" shown in **Figure 4** are examples of thickness **160** and width **162.**

In this depicted example, the plurality of adhesive layers **152** may change in thickness **160** within at least one region of the composite rework patch **150.** This change in thickness **160** forms the tapered adhesive sections **156** beneath the composite rework patch **150.**

In an illustrative example, the adhesive has a variable thickness-to-width ratio **165** within each of tapered adhesive sections **156.** For example, different adhesive sections may have a 30-to-1 ratio, a 20-to-1 ratio, a 10-to-1 ratio, or other ratios, depending on the particular implementation. As a result, the slope of each of the tapered adhesive sections **156** may be different.

In an illustrative example, when placing adhesive on composite structure **138,** each layer of adhesive may have the same thickness but a different width. When plurality of adhesive layers **152** are stacked on top of one another with varying widths, the layers form stacks of adhesive that have different thicknesses.

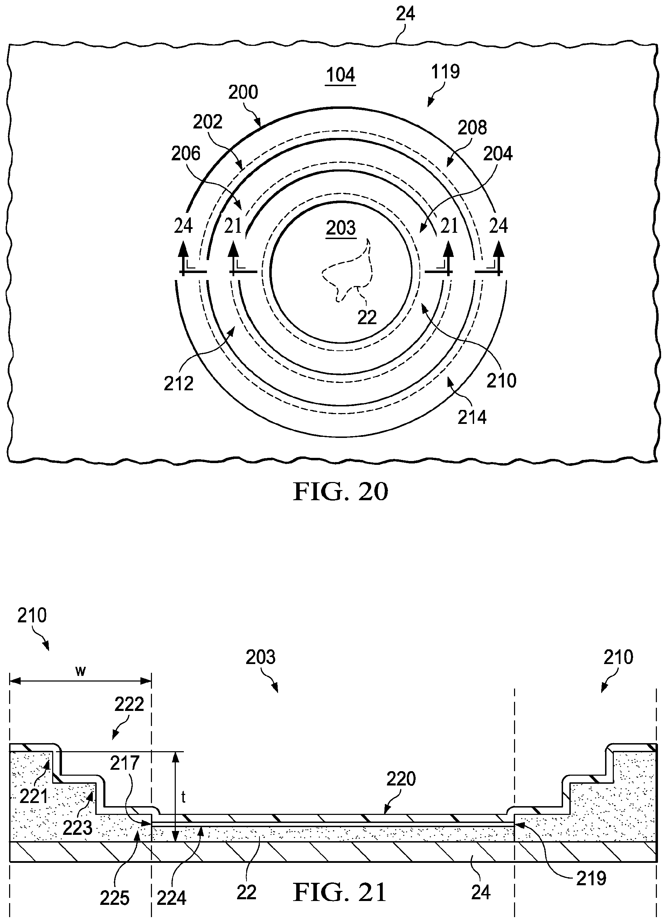

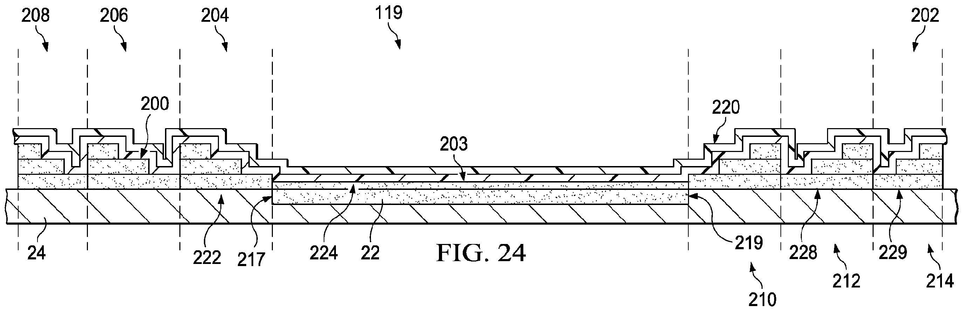

For example, when positioning the adhesive, each subsequent layer of adhesive may be narrower than the previous layer. For example, a first layer may have a first width and a second layer placed on top of the first layer may have a second width smaller than the first width. Further, a third layer placed on top of the second layer may have an even smaller width, and so on. In this manner, the plurality of adhesive layers **152** form a stair-stepped, or tapered, configuration within each of the tapered adhesive sections **156.** Accordingly, the thickness-to-width ratio **156** of each of the tapered adhesive sections **156** may be different based on the number of layers stacked on top of one another, the width of those layers, or both. An illustration of this concept is shown in **Figure 21** and **Figure 24****.**

In the illustrative example, the tapered adhesive sections **156** formed by the plurality of adhesive layers **152** may generally correspond to the plurality of regions **158** of the composite rework patch **150.** In other words, one of the tapered adhesive sections **156** may be positioned directly underneath one of the plurality of regions **158** in the composite rework patch **150.**

In some cases, a greater number of tapered adhesive sections **156** may be present in the patch system **132** than the plurality of regions **158** in the composite rework patch **150.** For example, without limitation, three regions may be present in the composite rework patch **150,** while five tapered adhesive sections **156** may be present underneath the composite rework patch **150.** In a similar fashion, a greater number of regions may be present in the composite rework patch **150** than in the plurality of adhesive layers **152.** As an example, four regions may be present in the composite rework patch **150,** while three or fewer tapered adhesive sections **156** may be present underneath the composite rework patch **150.**

As depicted, the tapered adhesive sections **156** comprise a first section **166,** a second section **168** surrounding a perimeter of the first section **166,** and a third section **170** surrounding a perimeter of the second section **168.** In some illustrative examples, a number of additional sections may be present. For instance, a fourth section **172** may surround a perimeter of the third section **170,** and so on.

In some cases, gaps **173** may be present between one or more of the tapered adhesive sections **156.** An example of an implementation for the gaps **173** is shown in **Figure 7** as "g." The gaps **173** may be circumferential gaps between the tapered adhesive sections **156** that are configured to reduce the growth of the inconsistent area **144.** In other illustrative examples, the gaps **173** may not be present or may have different configurations than shown in **Figure 7****.**

In this illustrative example, the patch system **132** is designed such that each of the plurality of regions **158** in the composite rework patch **150** releases a strain energy **174** into and out of the composite rework patch **150** at different rates **176.** In a similar fashion, each of the tapered adhesive sections **156** may be tailored to release the strain energy 174 at the different rates **176.**

Specifically, the strain energy **174** may be released out of the composite structure **138** and into the composite rework patch **150** at different rates **176.** The strain energy **174** may then be directed back into the composite structure **138** outside of inconsistent area **22** to arrest extension of the inconsistent area **22** and prevent disbond between the composite rework patch **150** and the composite structure **138.**

In this illustrative example, the strain energy **174** is the energy stored by a system undergoing deformation under a load **178.** When the load **178** is removed, strain energy **174** is gradually released as the system returns to its original shape.

A desirable release of the strain energy **174** extends the life of the patch system **132,** reduces the risk of additional inconsistencies forming in the structure **136,** or both. It may be desirable to release the strain energy **174** at a greater rate in portions of the composite rework patch **150** that are further away from the inconsistent area **22** to prevent extension of the inconsistent area **22.**

Each of the plurality of regions **158** may have different characteristics **180** that allow for the strain energy **174** to be released at the different rates **176.** Each of the tapered adhesive sections **156** also may have different characteristics **180.**

In this illustrative example, the characteristics **180** may be tailored to produce the patch system **132** that performs in a desired manner during the life of the aircraft **134.** The characteristics **180** may include at least one of structural properties **182,** an inter-laminar fracture design **184,** a structural shape **186,** or other suitable types of characteristics.

In an illustrative example, the structural properties **182** refer to various load handling and load transfer characteristics of the material. For example, the structural properties **182** may refer to the ability of the material to resist elastic deformation, to release the strain energy **174,** or other properties.

In this depicted example, the structural properties **182** include kinematic constants, elastic constants, constitutive constants, inter-laminar fracture toughness, and other suitable properties. In this illustrative example, the kinematic constants represent the relationship between displacement and strain in a material. Each of the tapered adhesive sections **156** have a different stress-strain relationship in this illustrative example, resulting in different kinematic constants between sections.

The elastic constants represent the degree to which a material possesses elasticity. In other words, the elastic constants represent the extent to which the material will extend or compress when the load **178** is applied. Examples of elastic constants may include Poisson's ratio, modulus of elasticity, shear rigidity, and other constants. Each of the tapered adhesive sections **156** also may have different elastic constants than one another.

Further, each of the tapered adhesive sections **156** may have different constitutive constants. The constitutive constants represent bending characteristics of a material.

In an illustrative example, the tapered adhesive sections **156** are also designed to have a different inter-laminar fracture toughness. The inter-laminar fracture toughness may be described as the general resistance of a material to inter-laminar fracture.

In this illustrative example, "inter-laminar fracture," or delamination, is an undesired separation between two layers of material. For instance, inter-laminar fracture is the separation of two composite plies. As another example, inter-laminar fracture may occur between two of the plurality of adhesive layers **152.** In some cases, inter-laminar fracture may occur due to high out-of-plane loads coming from high peel stresses at the edge of the structure **136** which is under a bending load. The variable tapered adhesive is designed to effectively minimize these peel stresses.

In an illustrative example, the inter-laminar fracture toughness may be a value determined by the type of inter-laminar fracture design **184** selected for a material. In this example, the inter-laminar fracture design **184** refers to the configuration of each of the regions designed to resist inter-laminar fracture.

In this depicted example, the inter-laminar fracture design **184** of each of the plurality of regions **158** may include parameters such as ply orientation, the type of resin or matrix material used in each region, the thickness **160** of the plurality of adhesive layers **152** in each of the tapered adhesive sections **156,** the width **162** of the plurality of adhesive layers **152** of each of the tapered adhesive sections **156,** the position and side of gaps **173,** and other design parameters.

The inter-laminar fracture design **184** for each of the tapered adhesive sections **156** may include one of Mode I, Mode II, and Mode III properties. For instance, each of the tapered adhesive sections **156** may be designed to resist tensile loads (Mode I), shear loads (Mode II), or both tensile loads and shear loads (Mode III) in a desired manner.

In this depicted example, the structural shape **186** is a geometrical configuration of each of the regions in the composite rework patch **150** and the tapered adhesive sections **156.** For example, without limitation, the composite rework patch **150** may have a structural shape **186** selected from one of a circular shape, a rectangular shape, a square shape, or other suitable shapes. The structural shape **186** of the tapered adhesive sections **156** may be the same or different than the corresponding regions in the composite rework patch **150.**

In some illustrative examples, the structural shape **186** of the composite rework patch **150** may vary between the plurality of regions **158.** For instance, one region may have a circular shape while another region may have a rectangular shape. In other illustrative examples, the structural shape **186** for each region may be the same.

Using the characteristics **180,** the patch system **132** may be designed with the tapered adhesive sections **156** to arrest the growth of the inconsistent area **144** in the structure **136.** In particular, the structural properties **182** of the tapered adhesive sections **156** may aid in reducing the extension of the crack **146** in the structure **136.**

In some cases, when the structure **136** is the metal structure **140,** the tapered adhesive sections **156** may diminish a stress intensity **188** at the crack tip **148** on each end of the crack **146.** In this illustrative example, the stress intensity **188** is the amount of stress near the crack tip **148** caused by the load **178.** A diminished stress intensity **188** is desirable to arrest the growth of the crack **146.**

The illustration of the patch system **132** with the tapered adhesive sections **156** in **Figure 19** is not meant to imply physical or architectural limitations to the manner in which an illustrative embodiment may be implemented. Other components in addition to or in place of the ones illustrated may be used. Some components may be optional. Also, the blocks are presented to illustrate some functional components. One or more of these blocks may be combined, divided, or combined and divided into different blocks when implemented in an illustrative embodiment.

Turning next to **Figure 20****,** an illustration of a bonded composite rework patch is depicted in accordance with an illustrative embodiment. In this depicted example, an enlarged view of the composite rework patch **119** from **Figure 18** is shown. The composite rework patch **119** has been bonded to the composite structure **24** to cover the inconsistent area **22.** In this illustrative example, the composite rework patch **119** includes regions **200** arranged over tapered adhesive sections **202.**

The regions **200** are shown between the solid lines in this figure. Specifically, the composite rework patch **119** includes core **203,** first region **204,** second region **206,** and third region **208.** Each subsequent region extends circumferentially around the previous region.

In this illustrative example, the tapered adhesive sections **202** are shown between the dashed lines. The tapered adhesive sections **202** include a first section **210,** a second section **212,** and a third section **214** in this illustrative example.

As shown, the tapered adhesive sections **202** substantially correspond to the regions **200** of the composite rework patch **119.** A corresponding tapered adhesive section and patch region may be referred to collectively as an "adhesive-patch region."

As depicted, each of the individual tapered adhesive sections **202** has a different inter-laminar fracture toughness. In this illustrative example, the third section **214** has a Mode I inter-laminar fracture toughness of about 4.5 in-lbs/in², the second section **212** has a Mode II inter-laminar fracture toughness of about 13.5 in-lbs/in², and the first section **210** has a Mode III inter-laminar fracture toughness of about 20.5 in-lb/in². Other values for inter-laminar fracture toughness may be realized, depending on the particular implementation.

In a depicted example, regions **200** may be designed to also have different levels of inter-laminar fracture toughness. For instance, the inter-laminar fracture toughness of the third region **208** may be between about 1.75 in-lb/in² and about 2.5 in-lb/in². The inter-laminar fracture toughness of the second region **206** may be between about 2.5 in-lb/in² and about 3.5 in-lb/in², while the first region **204** may have an inter-laminar fracture toughness equal to or greater than about 5.00 in-lb/in² in this illustrative example. In this manner, each of the different regions **200** of plies and each of the different sections of adhesive may have different properties configured to release strain energy from the composite structure **24** to the composite rework patch **119** at different rates to arrest the growth of inconsistent area **22.**

In **Figure 21****,** an illustration of a local sectional view of a tapered adhesive section is depicted in accordance with an illustrative embodiment. In this depicted example, a sectional view of the composite rework patch **119** taken along the lines **21-21** in **Figure 20** is shown. In particular, a sectional view of adhesive tapering within first section **210** is shown.

As illustrated, the composite rework patch **119** includes composite layer **220** and adhesive layers **222.** In this illustrative example, for simplicity, the different plies within composite layer **220** are not shown. In this example, the tapered adhesive section includes a number of adhesive layers **222.**

As depicted, first section **210** has a variable tapered thickness-to-width ratio as it tapers from the thickest portion to the thinnest portion. The adhesive layers **222** include a high variability tapered adhesive **221,** a medium variability tapered adhesive **223,** and a small variability tapered adhesive **225** forming the tapered adhesive configuration in first section **210.**

No gaps are present between adhesive layers **222** in this illustrative example. Further, a flat, uniform adhesive layer **224** is positioned over core **203,** directly on inconsistent area **22.**

Within the inner adhesive-patch region **210-204,** the airframe load is transferred from the inconsistent area **22** to the composite rework patch **119.** This region distributes the initial incoming load out of the crack tip boundary **217-219** in the inconsistent area **22** and minimizes the crack tip forces. This action is achieved through an increase in Mode III inter-laminar torsional-shear capability coupled with an improved Poisson's ratio elastic constant and a reduction in inter-laminar stresses, as shown in **Figures 22-23****.**

In this manner, the adhesive-patch region **210-204** substantially prevents undesirable structural plastic deformation in the composite rework patch **119.** As a result, this region enhances and improves the damage tolerance of the composite rework patch **119** to prevent the extension of the inconsistent area **22.** Further, this region reduces or eliminates the "unzipping" of the composite rework patch under various aerodynamic loads. "Unzipping" may disbond between the composite rework patch and the composite structure **24.**

Referring next to **Figure 22****,** an illustration of a graph of the inter-laminar tension stress inside a bonded patch is depicted in accordance with an illustrative embodiment. In this illustrative example, a graph **226** shows the out-of-plane inter-laminar tension stress inside the composite rework patch **119.**

As shown, the graph **226** shows the distance across the overlap of the patch versus the inter-laminar tension stress (psi). In this example, the out-of-plane inter-laminar tension stress inside the composite rework patch **119** is negative.

As indicated by the graph **226,** the tapered adhesive layers **222** limit the stress profile. In other words, the stress distribution is small as a result of the slope of the adhesive layers **222** such that the stress becomes less of a driving force. Compared to some currently used systems without the tapered adhesive layers **222,** an illustrative embodiment arrests the driving force and prevents crack propagation.

Turning next to **Figure 23****,** an illustration of a graph of the inter-laminar sheer stress distribution inside a bonded patch is depicted in accordance with an illustrative embodiment. In this illustrative example, a graph **227** shows the shear stress distribution inside the composite rework patch **119.**

As shown, the graph **227** shows the distance across the overlap of the patch versus the inter-laminar shear stress (psi). As indicated by graph **227,** the tapered adhesive layers **222** reduce the peak inter-laminar shear stress within the composite rework patch **119.** This reduction enhances the damage tolerance and fatigue durability of the patch over inconsistent area **22.**

In **Figure 24****,** an illustration of a global sectional view of a bonded composite rework patch on a composite structure is depicted in accordance with an illustrative embodiment. In this depicted example, a sectional view of the composite rework patch **119** taken along the lines **24-24** in **Figure 20** is shown.

Each of the tapered adhesive sections **202** has tapered adhesive layers in this illustrative example. In particular, the first section **210** has adhesive layers **222,** the second section **212** has adhesive layers **228,** and the third section **214** has adhesive layers **229.** The adhesive layers **228** and the adhesive layers **229** may be tapered in the same manner or a different manner than the adhesive layers **222.**

Although three adhesive layers are shown in each of tapered adhesive sections **202,** other numbers of layers may be present. Five layers, nine layers, fourteen layers, or some other number of layers may be present. Also, although three composite plies are shown in composite layer **220,** other numbers of plies may be used. Gaps also may be present between tapered adhesive sections **202** in some illustrative examples.

With the configuration shown in **Figures 20-24****,** the composite rework patch **119** behaves in a desired manner. Within the inner adhesive-patch region **210-204,** the airframe load is transferred from the inconsistent area **22** to the composite rework patch **119** and distributes the initial incoming load out of the crack tip boundary to minimize the crack tip forces, as shown and described with reference to **Figures 21-23****.**

The middle adhesive-patch region **212-206** of Mode II reduces the in-plane strain energy release rate in the inconsistent area **22.** In this manner, the adhesive-patch region **212-206** reduces the rate of inter-laminar and interfacial growth of inconsistent area **22.** This region enhances the fatigue durability of the entire airframe composite skin. As a result, the composite structure **24** is able to carry limit load effectively.

The outer adhesive-patch region **214-208** is designed to minimize and control the unzipping effects of the composite rework patch **119.** The outer adhesive-patch region **214-208** is designed to mitigate the high out-of-plane normal damaging loads effects. This control is accomplished through the design of a combination of high Mode I inter-laminar fracture toughness, elastic constants, and the variable tapered angle. This region is effective in reducing the strain energy release rate in the inconsistent area **22** by redistribution of the load into the aircraft skin. As a result, the adhesive-patch region **214-208** maintains static strength over various aerodynamic conditions such as high gust and maneuver loads.

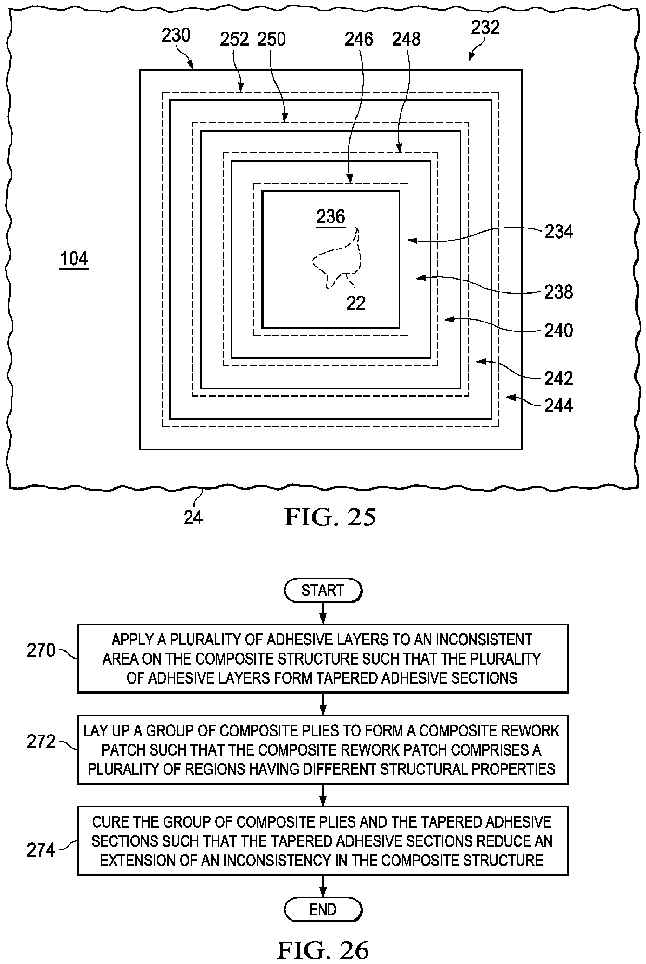

Referring now to **Figure 25****,** an illustration of a bonded composite rework patch is depicted in accordance with an illustrative embodiment. In this depicted example, an enlarged view of a composite rework patch is shown. A composite rework patch **230** has replaced the composite rework patch **119** over inconsistent area **22** in composite structure **24.**

The composite rework patch **230** is an example of another implementation for the patch system **132** shown in block form in **Figure 19****.** The composite rework patch **230** has been bonded to the composite structure **24** to cover the inconsistent area **22.**

In this illustrative example, the composite rework patch **230** has regions **232** arranged over tapered adhesive sections **234.** The regions **232,** shown between the solid lines, include core **236,** first region **238,** second region **240,** third region **242,** and fourth region **244.** Each subsequent region extends circumferentially around the previous region.

In this illustrative example, the tapered adhesive sections **234** are shown between the dashed lines. The tapered adhesive sections **234** include a first section **246,** a second section **248,** a third section **250,** and fourth section **252** in this illustrative example. As shown, the tapered adhesive sections **234** substantially correspond to the regions **232** of the composite rework patch **230.**

As depicted, each of the individual tapered adhesive sections **234** has different inter-laminar fracture toughness. In this illustrative example, the fourth section **252** has a Mode I inter-laminar fracture toughness of about 4.5 in-lbs/in², the third section **250** has a Mode I inter-laminar fracture toughness of about 7.5 in-lbs/in², the second section **248** has a Mode II inter-laminar fracture toughness of about 13.5 in-lbs/in², the first section **246** has a Mode III inter-laminar fracture toughness of about 20.5 in-lb/in². Other values for inter-laminar fracture toughness may be realized, depending on the particular implementation.

The regions **232** of the composite rework patch **230** may be substantially similar in inter-laminar fracture toughness to regions **200** shown and described in **Figure 20****.** In addition, the inter-laminar fracture toughness of fourth region **244** is less than that of third region **242.** In other illustrative examples, other values may be used.

Moreover, the design of each of the regions **232** and the tapered adhesive sections **234** may be modified based on the different loads applied to the underlying structure. For instance, the design of the composite rework patch may differ based on where the composite rework patch is used on an aircraft. As an example, the structural design of the composite rework patch may be different when used on a structural skin panel of a wing than when it is used on a structural empennage. As a result, one or more of the characteristics of the regions **232,** the tapered adhesive sections **234,** or both may be altered to achieve desired performance.

The different configurations shown in **Figures 20-25** are shown to illustrate some of the different designs that can be provided with the use of an illustrative embodiment. Various other configurations also may be used to develop desired structural properties for the composite rework patch **230.**

Additionally, similar configurations for a patch may be used in metal applications to patch a metal structure. In such a case, the patch will be designed to reduce the stress intensity in the inconsistent area. In particular, the tapered adhesive regions are designed to reduce the stress intensity at the crack tip to arrest the growth of the crack and extend the functional life of the patch.

The illustrations and descriptions of the composite rework patch **30,** the composite rework patch **119,** and the composite rework patch **230** in **Figures 1-****16,** and **Figures 19-25** are not meant to imply physical or architectural limitations to the manner in which an illustrative embodiment may be implemented. Other components in addition to or in place of the ones illustrated may be used. Some components may be optional.

The different components shown **Figures 1-16****,** and **Figures 20-25** may be illustrative examples of how components shown in block form in **Figure 19** can be implemented as physical structures. Additionally, some of the components **Figures 1-16****,** and **Figures 20-25** may be combined with components in **Figure 19****,** used with components in **Figure 19****,** or a combination of the two.

With reference now to **Figure 26****,** an illustration of a flowchart of a process for reworking a composite structure using a patch system with tapered adhesive sections is depicted in accordance with an illustrative embodiment. The process illustrated in **Figure 26** may be implemented in the rework environment **130** in **Figure 19****.** The different operations may be implemented to form the patch system **132** on the structure **136** to arrest growth of the inconsistent area **144.**

In step **270,** a plurality of adhesive layers is applied to an inconsistent area on the composite structure such that the plurality of adhesive layers form tapered adhesive sections. The plurality of adhesive layers may be applied such that each of the tapered adhesive sections has different structural properties, a different thickness-to-width ratio, or other suitable parameters.

A group of composite plies is laid up in step **272** to form a composite rework patch such that the composite rework patch comprises a plurality of regions having different structural properties. In step **274,** the group of composite plies and the tapered adhesive sections are cured such that the tapered adhesive sections reduce an extension of an inconsistency in the composite structure.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of module, a segment, a function, or a portion or combination thereof of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

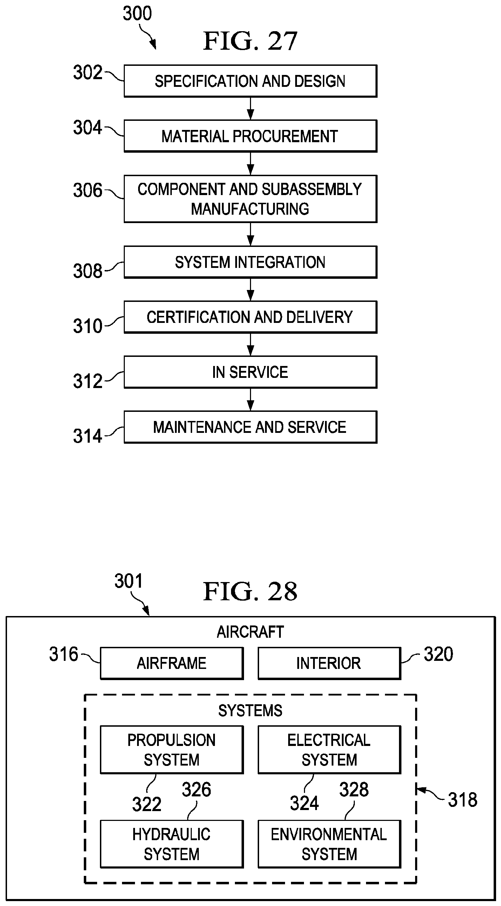

Illustrative embodiments of the disclosure may be described in the context of aircraft manufacturing and service method **300** as shown in **Figure 27** and aircraft **320** as shown in **Figure 28****.** Turning first to **Figure 27****,** an illustration of an aircraft manufacturing and service method is depicted in accordance with an illustrative embodiment. During pre-production, the aircraft manufacturing and service method **300** may include a specification and design **302** of an aircraft **301** in **Figure 28** and a material procurement **304.**

During production, component and subassembly manufacturing **306** and system integration **308** of the aircraft **301** in **Figure 28** takes place. Thereafter, the aircraft **301** in **Figure 28** may go through certification and delivery **310** in order to be placed in service **312.** While in service **312** by a customer, the aircraft **301** in **Figure 28** is scheduled for routine maintenance and service **314,** which may include modification, reconfiguration, refurbishment, and other maintenance or service.

Each of the processes of the aircraft manufacturing and service method **300** may be performed or carried out by a system integrator, a third party, an operator, or a combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 28****,** an illustration of an aircraft is depicted in which an illustrative embodiment may be implemented. In this example, the aircraft **301** is produced by the aircraft manufacturing and service method **300** in **Figure 27** and may include an airframe **316** with a plurality of systems **318** and an interior **320.** Examples of the systems **318** include one or more of a propulsion system **322,** an electrical system **324,** a hydraulic system **326,** and an environmental system **328.** Any number of other systems may be included. Although an aerospace example is shown, different illustrative embodiments may be applied to other industries, such as the automotive industry.

Apparatuses and methods embodied herein may be employed during at least one of the stages of the aircraft manufacturing and service method **300** in **Figure 27****.** In particular, the patch system **132** with the tapered adhesive sections **156** from **Figure 19** may be installed during any one of the stages of the aircraft manufacturing and service method **300.** For example, without limitation, the patch system **132** with the tapered adhesive sections **156** may be used to rework a structure in aircraft **301** during at least one of component and subassembly manufacturing **306,** routine maintenance and service **314,** or some other stage of the aircraft manufacturing and service method **300.**

For instance, the patch system **132** may be used upon discovery of an inconsistent area in a structure in the aircraft **301.** This inconsistent area may have been formed during component and subassembly manufacturing **306.** Instead of discarding the structure, the area can be patched using the patch system **132** and still comply with applicable standards.

As another illustrative example, an inconsistent area in a structure in the aircraft **301** may be discovered during routine maintenance and service **314.** In this case, instead of reworking all of the structure, or replacing the structure, the patch system **132** may be employed. With the use of the tapered adhesive sections **156,** the life of the patch system **132, as** well as the structure in the aircraft **301** may be extended.

In one illustrative example, components or subassemblies produced during component and subassembly manufacturing **306** in **Figure 27** may be fabricated or manufactured in a manner similar to components or subassemblies produced while the aircraft **301** is in service **312** in **Figure 27****.** As yet another example, one or more apparatus embodiments, method embodiments, or a combination thereof may be utilized during production stages, such as component and subassembly manufacturing **306** and system integration **308** in **Figure 27****.** One or more apparatus embodiments, method embodiments, or a combination thereof may be utilized while the aircraft **301** is in service **312,** during maintenance and service **314** in **Figure 27****,** or a combination thereof. The use of a number of the different illustrative embodiments may substantially expedite the assembly, reduce the cost of aircraft **301,** or both.

Thus, the illustrative embodiments provide a method and apparatus for reworking a structure. The structure may take the form of the composite structure **138** in the aircraft **134** in **Figure 19****.** In one illustrative example, an apparatus comprises the composite rework patch **150** and the plurality of adhesive layers **152** on the first side **154** of the composite rework patch **150.** The first side **154** of the composite rework patch **150** has the contour **157** conforming to the inconsistent area **144** on the composite structure **138.** The composite rework patch **150** comprises the plurality of regions **158** having different structural properties **182.** The plurality of adhesive layers **152** change in thickness **160** within at least one region of the composite rework patch **150** to form the tapered adhesive sections **156.**

The illustrative embodiments provide a combination of structural multiple regionalized adhesives integrated into composite tailored layers to form a structural patch designed to substantially retard and arrest multi-site skin cracks and complex delamination various models of aircraft. This combined complex integrated composite-adhesive rework patch with a static strength outer region, a durability strength middle region, and a damage tolerance fail-safe inner core region, as described in **Figures 1-16****,** releases strain energy in a desired manner. As a result, the patch lasts longer and provides better structural integrity than some currently used systems.

Moreover, this integrated adhesive patch is designed with variable taper angles in the adhesive, which mitigate and reduce the high damaging inter-laminar shear and tension stress at the cracked skin boundaries. No bolts are used with an illustrative embodiment. As a result, the illustrative embodiments improve the global structural damage tolerance capability of the underlying composite skin.

With the introduction of the tapered adhesive regions, the composite rework patch may meet the airworthiness standards promulgated by the Federal Aviation Administration (FAA), and the European Aviation Safety Agency (EASA), among others. For example, the patch may qualify for the FAA Federal Aviation Regulation (FAR) 25-571e credit as a structurally integrated fuselage or wing repaired skin able to carry 150% limit load. The illustrative embodiments also meet various other EASA and FAA airworthiness standards.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An apparatus for reworking a structure for example an aircraft structure, the apparatus comprising:
a composite rework patch (119), wherein the composite rework patch comprises a composite layer having a group of composite plies,
the composite rework patch (119) including a first side having a contour conforming to an inconsistent area (22) on a composite structure, wherein the composite rework patch comprises a plurality of regions having different structural properties; and
a plurality of adhesive layers (202, 222) on the first side of the composite rework patch, wherein the plurality of adhesive layers (202,222) change in thickness within at least one region of the composite rework patch to form tapered adhesive section,
wherein the composite rework patch (119) includes regions (200) arranged over the tapered adhesive layers (202,222),
wherein the regions (200) include a core (203) a first region (204), a second region (206) and a third region (208), whereby each subsequent region extends circumferentially around the previous region,
wherein the tapered adhesive layers (202,222) include a first section (210), a second section (212) and a third section (214), which tapered sections (210, 212, 214) substantially correspond to the regions (200) of the composite rework patch (119),
wherein each of the individual tapered adhesive sections (202) has a different inter-laminar fracture toughness,
which composite rework patch (119) includes a composite layer (220),
wherein the first section (210) of the tapered adhesive layers (202,222) has a variable thickness to width ratio as it tapers from a thickest portion to a thinnest portion,
wherein the adhesive layers (222) include a high variability tapered adhesive (221), a medium variability tapered adhesive (223) and a small variability tapered adhesive (225) forming a tapered adhesive configuration in first section (210),
wherein no gaps are present between adhesive layers (222), and a flat uniform adhesive layer (224) is positioned over core (203).

2. The apparatus of claim 1, wherein each of the tapered adhesive sections has the different structural properties.

3. The apparatus of claim 2, wherein the different structural properties include at least one of kinematic constants, elastic constants, constitutive constants, or inter-laminar fracture toughness in the plurality of adhesive layers.

4. The apparatus of any of the preceding claims, wherein each of the tapered adhesive sections has a different inter-laminar fracture design having one of Mode I, Mode II, and Mode III properties.

5. The apparatus of any of the preceding claims, wherein each of the tapered adhesive sections releases strain energy into and out of the composite rework patch at different rates.

6. The apparatus of any of the preceding claims, wherein the plurality of adhesive layers comprise a film adhesive.

7. The apparatus of any of the preceding claims, wherein the composite structure is selected from one of a control structure surface, a structural skin panel, a wing structure, and a structural empennage.

8. The apparatus of any of the preceding claims, wherein the inconsistent area comprises a crack and the tapered adhesive sections reduce an extension of the crack.

9. A method for reworking a composite structure using an apparatus according to any of the preceding claims, the method comprising:
applying a plurality of adhesive layers to an inconsistent area on the composite structure, wherein the plurality of adhesive layers form tapered adhesive sections;
laying up a group of composite plies on the tapered adhesive sections; and curing the group of composite plies and the tapered adhesive sections to form a composite rework patch having a plurality of regions having different structural properties,
wherein the composite rework patch (119) includes regions (200) arranged over the tapered adhesive layers (202,222),
wherein the regions (200) include a core (203) a first region (204), a second region (206) and a third region (208), whereby each subsequent region extends circumferentially around the previous region,
wherein the tapered adhesive layers (202,222) include a first section (210), a second section (212) and a third section (214), which tapered sections (210, 212, 214) substantially correspond to the regions (200) of the composite rework patch (119),
wherein each of the individual tapered adhesive sections (202) has a different inter-laminar fracture toughness,
which composite rework patch (119) includes a composite layer (220),
wherein the first section (210) of the tapered adhesive layers (202,222) has a variable thickness to width ratio as it tapers from a thickest portion to a thinnest portion,
wherein the adhesive layers (222) include a high variability tapered adhesive (221), a medium variability tapered adhesive (223) and a small variability tapered adhesive (225) forming a tapered adhesive configuration in first section (210),
wherein no gaps are present between adhesive layers (222), and a flat uniform adhesive layer (224) is positioned over core (203).

10. The method of claim 9, further comprising forming the tapered adhesive sections such that an extension of a crack is reduced.

11. The method of claims 9 or 10, further comprising:
applying the plurality of adhesive layers such that each of the plurality of adhesive layers has a different width.

12. An aircraft comprising an apparatus according to any of the preceding claims 1-8.

## Patentansprüche

1. Vorrichtung zum Überarbeiten einer Struktur, zum Beispiel einer Flugzeugstruktur, wobei die Vorrichtung Folgendes umfasst:
ein Überarbeitungspatch (119) aus Verbundmaterial, wobei das Überarbeitungspatch aus Verbundmaterial eine Verbundschicht umfasst, die eine Gruppe von Lagen aus Verbundmaterial aufweist,
wobei das Überarbeitungspatch (119) aus Verbundmaterial eine erste Seite umfasst, deren Umriss einem unstimmigen Bereich (22) auf einer Verbundstruktur entspricht, wobei das Überarbeitungspatch aus Verbundmaterial eine Vielzahl von Zonen umfasst, die unterschiedliche strukturelle Eigenschaften aufweisen; und
eine Vielzahl von Haftschichten (202, 222) auf der ersten Seite des Überarbeitungspatches aus Verbundmaterial, wobei die Vielzahl von Haftschichten (202, 222) innerhalb wenigstens einer Zone des Überarbeitungspatches aus Verbundmaterial in ihrer Dicke so variiert, dass sie sich verjüngende Haftabschnitte bildet,
wobei das Überarbeitungspatch (119) aus Verbundmaterial Zonen (200) aufweist, die über den sich verjüngenden Haftschichten (202, 222) ausgerichtet sind,
wobei die Zonen (200) einen Kern (203), eine erste Zone (204), eine zweite Zone (206) und eine dritte Zone (208) umfassen, wobei jede nachfolgende Zone sich umfangsmäßig um die vorherige Zone erstreckt,
wobei die sich verjüngenden Haftschichten (202, 222) einen ersten Abschnitt (210), einen zweiten Abschnitt (212) und einen dritten Abschnitt (214) umfassen, wobei die sich verjüngenden Abschnitte (210, 212, 214) im Wesentlichen den Zonen (200) des Überarbeitungspatches (119) aus Verbundmaterial entsprechen,
wobei jeder der einzelnen sich verjüngenden Haftabschnitte (202) eine unterschiedliche interlaminare Bruchzähigkeit aufweist,
wobei das Überarbeitungspatch (119) aus Verbundmaterial eine Verbundschicht (220) umfasst,
wobei der erste Abschnitt (210) der sich verjüngenden Haftschichten (202, 222) ein variables Verhältnis von Dicke zu Breite aufweist, während er sich von einem dicksten Abschnitt zu einem dünnsten Abschnitt verjüngt,
wobei die Haftschichten (222) ein sich verjüngendes Haftmittel (221) mit hoher Variabilität, ein sich verjüngendes Haftmittel (223) mit mittlerer Variabilität und ein sich verjüngendes Haftmittel (225) mit niedriger Variabilität umfassen, die eine sich verjüngende Haftmittelkonfiguration in dem ersten Abschnitt (210) bilden,
wobei zwischen den Haftschichten (222) keinerlei Lücken vorhanden sind und eine flache gleichmäßige Haftschicht (224) über dem Kern (203) angeordnet ist.

2. Vorrichtung nach Anspruch 1, wobei jeder der sich verjüngenden Haftabschnitte die unterschiedlichen strukturellen Eigenschaften aufweist.

3. Vorrichtung nach Anspruch 2, wobei die unterschiedlichen strukturellen Eigenschaften wenigstens eine der Folgenden umfassen: kinematische Konstanten, elastische Konstanten, konstitutive Konstanten und interlaminare Bruchzähigkeit in der Vielzahl von Klebstoffschichten.

4. Vorrichtung nach einem der vorhergehenden Ansprüche, wobei jeder der sich verjüngenden Haftabschnitte eine unterschiedliche interlaminare Bruchgestaltung entweder mit Modus I-, Modus II- oder Modus III-Eigenschaften aufweist.

5. Vorrichtung nach einem der vorhergehenden Ansprüche, wobei jeder der sich verjüngenden Haftabschnitte Belastungsenergie in unterschiedlichen Raten in das und aus dem Überarbeitungspatch aus Verbundmaterial freigibt.

6. Vorrichtung nach einem der vorhergehenden Ansprüche, wobei die Vielzahl von Haftschichten ein Filmhaftmittel umfasst.

7. Vorrichtung nach einem der vorhergehenden Ansprüche, wobei die Verbundstruktur aus einer der folgenden ausgewählt ist: eine Steuerstrukturoberfläche, eine strukturelle Außenhautplatte, eine Tragflächenstruktur und ein strukturelles Leitwerk.

8. Vorrichtung nach einem der vorhergehenden Ansprüche, wobei der unstimmige Bereich einen Riss umfasst und die sich verjüngenden Haftabschnitte eine Ausbreitung des Risses verringern.

9. Verfahren zum Überarbeiten einer Verbundstruktur unter Verwendung einer Vorrichtung nach einem der vorhergehenden Ansprüche, wobei das Verfahren Folgendes umfasst:
Aufbringen einer Vielzahl von Haftschichten auf einen unstimmigen Bereich auf der Verbundstruktur, wobei die Vielzahl von Haftschichten sich verjüngende Haftabschnitte bilden;
Auflegen einer Gruppe von Lagen aus Verbundmaterial auf die sich verjüngenden Haftabschnitte; und
Aushärten der Gruppe von Lagen aus Verbundmaterial und der sich verjüngenden Haftabschnitte, um ein Überarbeitungspatch aus Verbundmaterial mit einer Vielzahl von Zonen mit unterschiedlichen strukturellen Eigenschaften zu bilden,
wobei das Überarbeitungspatch (119) aus Verbundmaterial Zonen (200) aufweist, die über den sich verjüngenden Haftschichten (202, 222) ausgerichtet sind,
wobei die Zonen (200) einen Kern (203), eine erste Zone (204), eine zweite Zone (206) und eine dritte Zone (208) umfassen, wobei jede nachfolgende Zone sich umfangsmäßig um die vorherige Zone erstreckt,
wobei die sich verjüngenden Haftschichten (202, 222) einen ersten Abschnitt (210), einen zweiten Abschnitt (212) und einen dritten Abschnitt (214) umfassen, wobei die sich verjüngenden Abschnitte (210, 212, 214) im Wesentlichen den Zonen (200) des Überarbeitungspatches (119) aus Verbundmaterial entsprechen,
wobei jeder der einzelnen sich verjüngenden Haftabschnitte (202) eine unterschiedliche interlaminare Bruchzähigkeit aufweist,
wobei das Überarbeitungspatch (119) aus Verbundmaterial eine Verbundschicht (220) umfasst,
wobei der erste Abschnitt (210) der sich verjüngenden Haftschichten (202, 222) eine variables Verhältnis von Dicke zu Breite aufweist, während er sich von einem dicksten Abschnitt zu einem dünnsten Abschnitt verjüngt,
wobei die Haftschichten (222) ein sich verjüngendes Haftmittel (221) mit hoher Variabilität, ein sich verjüngendes Haftmittel (223) mit mittlerer Variabilität und ein sich verjüngendes Haftmittel (225) mit niedriger Variabilität umfassen, die eine sich verjüngende Haftmittelkonfiguration in dem ersten Abschnitt (210) bilden,
wobei zwischen den Haftschichten (222) keinerlei Lücken vorhanden sind und eine flache gleichmäßige Haftschicht (224) über dem Kern (203) angeordnet ist.

10. Verfahren nach Anspruch 9, das weiterhin das Bilden von sich verjüngenden Haftabschnitten umfasst, so dass eine Ausbreitung eines Risses verringert wird.

11. Verfahren nach Anspruch 9 oder 10, das weiterhin Folgendes umfasst:
Aufbringen der Vielzahl von Haftschichten, so dass jede aus der Vielzahl von Haftschichten eine unterschiedliche Breite aufweist.

12. Flugzeug, das eine Vorrichtung nach einem der vorhergehenden Ansprüche 1 bis 8 umfasst.

## Revendications

1. Dispositif de reprise d'une structure, par exemple une structure d'aéronef, le dispositif comprenant :
une pièce composite de reprise (119), laquelle pièce composite de reprise comprend une couche composite présentant un groupe de pellicules composites,
la pièce composite de reprise (119) comportant une première face présentant un contour s'adaptant à une zone irrégulière (22) présente sur une structure composite, ladite pièce composite de reprise comprenant une pluralité de régions présentant des propriétés structurelles différentes ; et
une pluralité de couches adhésives (202, 222) présentes sur la première face de la pièce composite de reprise, ladite pluralité de couches adhésives (202, 222) variant en épaisseur au sein d'au moins une région de la pièce composite de reprise pour former des sections adhésives à déclivité ;
ladite pièce composite de reprise (119) comportant des régions (200) agencées dans les couches adhésives à déclivité (202, 222),
lesdites régions (200) comprenant un centre (203), une première région (204), une deuxième région (206) et une troisième région (208), chaque région subséquente entourant la région précédente,
lesdites couches adhésives à déclivité (202, 222) comprenant une première section (210), une deuxième section (212) et une troisième section (214), lesdites sections à déclivité (210, 212, 214) étant sensiblement en correspondance avec les régions (200) de la pièce composite de reprise (119),
chacune des sections adhésives à déclivité (202) particulières présentant une résistance à la fracture interlaminaire différente,
ladite pièce composite de reprise (119) comportant une couche composite (220),
ladite première section (210) des couches adhésives à déclivité (202, 222) présentant un rapport épaisseur/largeur variable de par sa déclivité allant d'une partie la plus épaisse à une partie la plus mince,
lesdites couches adhésives (222) comprenant un adhésif de formation de déclivité à variabilité élevée (221), un adhésif de formation de déclivité à variabilité moyenne (223) et un adhésif de formation de déclivité à variabilité faible (225) formant une configuration adhésive à déclivité dans la première section (210),
aucun espace n'étant présent entre les couches adhésives (222), et une couche adhésive uniforme plane (224) étant disposée sur le centre (203).

2. Dispositif selon la revendication 1, dans lequel chacune des sections adhésives à déclivité présente les propriétés structurelles différentes.

3. Dispositif selon la revendication 2, dans lequel les propriétés structurelles différentes comprennent au moins une propriété parmi des constantes cinématiques, des constantes élastiques, des constantes constitutives ou la résistance à la fracture interlaminaire dans la pluralité de couches adhésives.

4. Dispositif selon l'une quelconque des revendications précédentes, dans lequel chacune des sections adhésives à déclivité présente une conception anti-fracture interlaminaire différente présentant des propriétés de Mode I, de Mode II ou de Mode III.

5. Dispositif selon l'une quelconque des revendications précédentes, dans lequel chacune des sections adhésives à déclivité dégage une énergie de déformation vers la pièce composite de reprise ou partant de celle-ci à différents taux.

6. Dispositif selon l'une quelconque des revendications précédentes, dans lequel la pluralité de couches adhésives comprend un adhésif pelliculaire.

7. Dispositif selon l'une quelconque des revendications précédentes, dans lequel la structure composite est une structure choisie parmi une surface de structure de gouverne, un panneau de revêtement structurel, une structure d'aile et un empennage structurel.

8. Dispositif selon l'une quelconque des revendications précédentes, dans lequel la zone irrégulière comprend une fissure et les sections adhésives à déclivité réduisent la propagation de la fissure.

9. Procédé de reprise d'une structure composite au moyen d'un dispositif selon l'une quelconque des revendications précédentes, le procédé comprenant :
l'application d'une pluralité de couches adhésives sur une zone irrégulière présente sur la structure composite, ladite pluralité de couches adhésives formant des sections adhésives à déclivité,
la pose d'un groupe de pellicules composites sur les sections adhésives à déclivité, et
la prise du groupe de pellicules composites et des sections adhésives à déclivité pour former une pièce composite de reprise présentant une pluralité de régions présentant des propriétés structurelles différentes ;
ladite pièce composite de reprise (119) comprenant des régions (200) agencées dans les couches adhésives à déclivité (202, 222),
lesdites régions (200) comprenant un centre (203), une première région (204), une deuxième région (206) et une troisième région (208), chaque région subséquente entourant la région précédente,
lesdites couches adhésives à déclivité (202, 222) comprenant une première section (210), une deuxième section (212) et une troisième section (214), lesdites sections à déclivité (210, 212, 214) étant sensiblement en correspondance avec les régions (200) de la pièce composite de reprise (119),
chacune des sections adhésives à déclivité (202) particulières présentant une résistance à la fracture interlaminaire différente,
ladite pièce composite de reprise (119) comportant une couche composite (220),
ladite première section (210) des couches adhésives à déclivité (202, 222) présentant un rapport épaisseur/largeur variable de par sa déclivité allant d'une partie la plus épaisse à une partie la plus mince,
lesdites couches adhésives (222) comprenant un adhésif de formation de déclivité à variabilité élevée (221), un adhésif de formation de déclivité à variabilité moyenne (223) et un adhésif de formation de déclivité à variabilité faible (225) formant une configuration adhésive à déclivité dans la première section (210),
aucun espace n'étant présent entre les couches adhésives (222), et une couche adhésive uniforme plane (224) étant disposée sur le centre (203).

10. Procédé selon la revendication 9, comprenant en outre la formation des sections adhésives à déclivité de façon à réduire la propagation d'une fissure.

11. Procédé selon la revendication 9 ou 10, comprenant en outre :
l'application de la pluralité de couches adhésives de manière que chacune des couches adhésives ait une largeur différente.

12. Aéronef comprenant un dispositif selon l'une quelconque des revendications précédentes 1 à 8.
